(19) Europäisches Patentamt
European Patent Office
Office européen des brevets

(11) **EP 1 148 305 B1**

(12) **EUROPÄISCHE PATENTSCHRIFT**

(45) Veröffentlichungstag und Bekanntmachung des Hinweises auf die Patenterteilung:
**28.01.2004   Patentblatt 2004/05**

(51) Int Cl.[7]: **F25B 17/08**, F25B 41/06

(21) Anmeldenummer: **01108797.0**

(22) Anmeldetag: **07.04.2001**

(54) **Adsorptionswärmepumpe**

Adsorption heat pump

Pompe à chaleur à adsorption

(84) Benannte Vertragsstaaten:
**AT BE CH CY DE DK ES FI FR GB GR IE IT LI LU MC NL PT SE TR**

(30) Priorität: **17.04.2000  AT 6602000**

(43) Veröffentlichungstag der Anmeldung:
**24.10.2001   Patentblatt 2001/43**

(73) Patentinhaber: **Vaillant GmbH**
**42859 Remscheid (DE)**

(72) Erfinder:
• **Lang, Rainer, Dr.**
**51067 Köln (DE)**
• **Miltkau, Thorsten**
**52066 Aachen (DE)**
• **Dawoud, Belal**
**52070 Aachen (DE)**

(74) Vertreter: **Hocker, Thomas**
**Vaillant GmbH**
**Berghauser Strasse 40**
**42859 Remscheid (DE)**

(56) Entgegenhaltungen:
EP-A- 0 093 345          DE-C- 457 681
DE-C- 579 291            GB-A- 520 978
GB-A- 612 112            US-A- 2 520 045
US-A- 4 272 970

**Beschreibung**

Die Erfindung bezieht sich auf eine Adsorptionswärmepumpe gemäß dem Oberbegriff des Anspruches 1. Eine solche Wärmepumpe ist aus Dokument EP-A-0 093 345 schon bekannt.

Derartige Wärmepumpen der eingangs erwähnten Art können zur Beheizung von Gebäuden sowie zur Warmwasserbereitung eingesetzt werden. Sie zeichnen sich hierbei durch eine besonders gute Effizienz aus, da sie mit Hilfe eines thermodynamischen Kreisprozesses Umgebungswärme auf ein für Heiz- oder Warmwasserzwecke nutzbares Temperaturniveau anheben. Durch diesen Effekt können mit derartigen Wärmepumpen deutlich höhere primärenergetische Nutzungsgrade erreicht werden, als mit konventioneller Heiztechnik.

Ziel der Erfindung ist es, eine Adsorptionswärmepumpe der eingangs erwähnten Art vorzuschlagen, die sich durch einen sehr guten prozeßinternen Wärmeaustausch bei geringen Temperaturdifferenzen auszeichnet.

Erfindungsgemäß wird dies bei einer Adsorptionswärmepumpe der eingangs erwähnten Art durch die kennzeichnenden Merkmale des Anspruches 1 erreicht.

Durch die vorgeschlagenen Maßnahmen ergibt sich der Vorteil einer sehr einfachen Einstellung der Druckdifferenz zwischen dem Kondensator und Verdampfer. Außerdem zeichnet sich das Drosselorgan durch einen sehr einfach herstellbaren Aufbau aus. Durch die einfache und selbsttätige Einstellung der Druckdifferenz ergeben sich für die Adsorptionswärmepumpe sehr günstige Betriebsbedingungen.

In diesem Zusammenhang ist es besonders vorteilhaft, die Merkmale des Anspruches 2 vorzusehen.

Die Erfindung wird nun anhand der Zeichnung näher erläutert. Dabei zeigen:

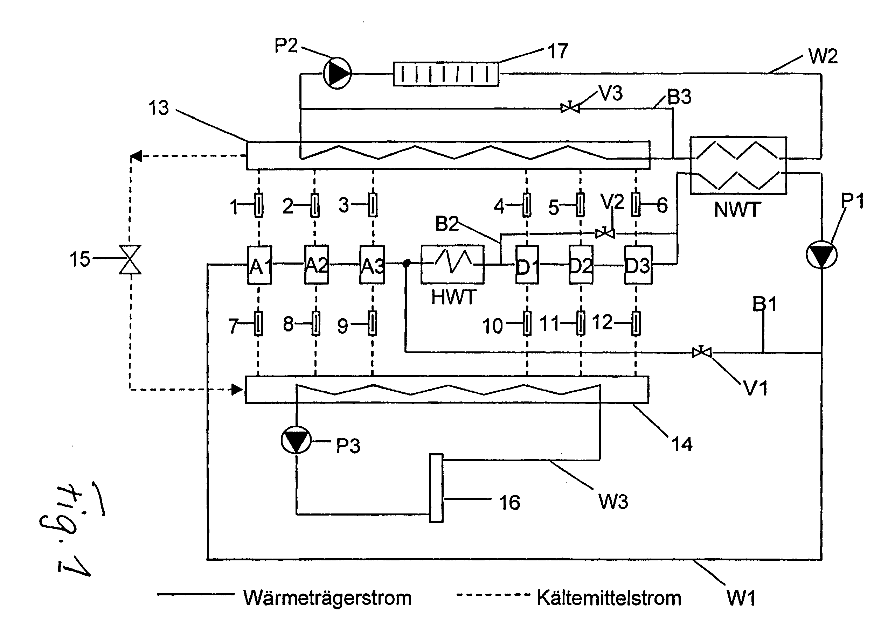

Fig. 1 schematisch ein Blockschaltbild einer erfindungsgemäßen Adsorptionswärmepumpe und

Fig. 2 schematisch ein Drosselorgan.

Gleiche Bezugszeichen bedeuten in beiden Figuren gleiche Einzelteile.

Bei der erfindungsgemäßen Adsorptionswärmepumpe sind je drei Adsorbermodule A1, A2, A3, in Serie geschaltet, die über einen Hochtemperatur- Wärmetauscher HWT mit drei in Reihe geschalteten Desorbermodulen D1, D2, D3 verbunden sind, vorgesehen. Zu den Desorbermodulen D1-D3 ist ein Zweig eines Niedertemperatur- Wärmetauschers NWT und eine Pumpe P1 in Reihe geschaltet. Diese Pumpe P1 ist druckseitig mit dem Adsorbermodul A1 verbunden.

Weiters ist die Druckseite der Pumpe P1 mit einer Bypaßleitung B1, die nicht zwingend vorgesehen sein muß, verbunden, die weiters mit dem Adsorbermodul A3, bzw. dem Hochtemperatur- Wärmetauscher HWT verbunden ist, wobei in der Bypaßleitung B1, die parallel zu der Reihenschaltung der Adsorbermodule A1, A2, A3 geschaltet ist, ein Ventil V1 angeordnet ist.

Eine weitere Bypaßleitung B2, die nicht zwingend vorgesehen sein muß, ist parallel zur Reihenschaltung der Desorbermodule D1, D2, D3 geschaltet, in der ebenfalls ein Ventil V2 angeordnet ist.

Dabei bilden die Adsorbermodule A1, A2, A3, der Hochtemperatur- Wärmetauscher HWT, die Desorbermodule D1, D2, D3, der mit diesen verbundene Zweig des Niedertemperatur-Wärmetauschers NWT und die zugehörigen Bypaßleitungen einen Wärmeträgerkreislauf W1.

Die Adsorber- bzw. Desorbermodule A1-A3, D1-D3 sind parallel mit einem gemeinsamen Kondensator 13 verbunden, wobei in jeder dieser zur Führung eines Kältemittels vorgesehenen Verbindungen je eine Rückschlagklappe 1 bis 6 angeordnet ist. Weiters sind die Adsorber- und Desorbermodule A1-A3, D1-D3 mit einem gemeinsamen Verdampfer 14 verbunden, wobei in jeder dieser ebenfalls zur Führung eines Kältemittels dienenden Verbindung je eine Rückschlagklappe 7 bis 12 angeordnet ist.

Der Verdampfer 14 ist über eine Pumpe P3 mit einem Umgebungs- Wärmetauscher 16 verbunden, wobei der Umgebungs- Wärmetauscher 16 und der Verdampfer 14 einen Wärmeträgerkreislauf W3 bilden.

Der Kondensator 13 ist über eine Pumpe P2 mit einem Wärmeverbraucher 17 und mit einem zweiten Zweig des Niedertemperatur- Wärmetauschers NWT verbunden, der weiters mit dem Kondensator 13 verbunden ist. Dabei ist eine weitere Bypaßleitung B3 parallel zum Kondensator 13 geschaltet, in der ein Ventil V3 angeordnet ist. Dabei ist jedoch die Bypassleitung B3 für die Funktion der Einrichtung nicht unbedingt erforderlich, aber zweckmäßig. Dabei bilden der Kondensator 13, der Wärmeverbraucher 17 mit dem Kondensator und dem zweiten Zweig des Niedertemperatur- Wärmetauschers NWT einen Wärmeträgerkreislauf W2.

Die zur Führung eines Kältemittels vorgesehenen Zweige des Verdampfers 14 und des Kondensators 13 sind über eine Drossel 15 miteinander verbunden, wobei der Kältemittelkreislauf über die Verbindungen zu den Adsorbermodulen A1-A3 und den Desorbermodulen D1-D3 geschlossen ist, wobei die Verbindungen zu den Adsorbermodulen A1-A3, bzw. Desorbermodulen D1-D3 parallel geschaltet sind.

Weiters ist eine nicht dargestellte Umschalteinrichtung vorgesehen. Diese stellt die Verbindung zwischen dem Hochtemperatur- Wärmetauscher HWT zu dem Desorbermodul D1 und die Verbindung von einem Desorbermodul D1-D3 zum nächsten, sowie zum Niedertemperatur- Wärmetauscher NWT her. Weiters stellt die Umschalteinrichtung die Verbindung von diesem zum Adsorbermodul A1 und von einem Adsorbermodul A1-A3 zum nächsten, sowie die Verbindung von diesen zum Hochtemperatur- Wärmetauscher HWT her, so daß der Wärmeträgerkreislauf W1 geschlossen ist. Die Reihenfolge der Komponenten ändert sich jedoch bei jeder Weiterschaltung.

Durch eine zyklische Weiterschaltung der Umschalteinrichtung im Wärmeträgerkreislauf W1 durchlaufen alle Module A1-A3, D1-D3 den kompletten Sorptionsprozeß.

Während des Wärmepumpenbetriebes sind die Ventile V1 und V2 in den Bypaßleitungen B1 und B2 geschlossen. Im Hochtemperatur- Wärmetauscher HWT wird Wärme, z.B. mit Hilfe eines Gasbrenners, in den Wärmeträgerkreislauf W1 eingekoppelt. Dadurch durchströmt der heiße Wärmeträger nacheinander alle in der Hochdruckphase bzw. Desorptionsphase befindlichen Module D1-D3, wobei sich der Wärmeträger abkühlt.

Durch die Wärmeabgabe an die Desorbermodule D1-D3 wird der dort aufgebrachte Adsorbens erhitzt. Das im Adsorbens befindliche Adsorbat wird verdampft, strömt durch die Rückschlagklappen 4 -6 zum Kondensator 13 und wird dort verflüssigt. Die dabei entstehende Kondensationswärme wird vom Wärmeträgerkreislauf W2 aufgenommen und als Nutzwärme an den Verbraucher 17 abgegeben.

Der Wärmeträger im Wärmeträgerkreislauf W1 strömt nach Passieren der desorbierenden Module D1-D3 zum Niedertemperatur- Wärmetauscher NWT und wird dort weiter abgekühlt, wobei diese Wärme durch den Wärmeträgerkreislauf W2 ebenfalls als Nutzwärme zum Verbraucher 17 gelangt.

Danach durchströmt der Wärmeträger im Wärmeträgerkreislauf W1 nacheinander alle in der Niederdruckphase, bzw. Adsorptionsphase befindlichen Module A1-A3, wobei der Wärmeträger durch Aufnahme der Adsorptionswärme aufgeheizt wird. Die Aufheizung beruht darauf, daß während der Desorptionsphase im Kondensator 13 verflüssigtes Adsorbat durch die Drossel 15 vom höheren Kondensatordruck auf den niedrigeren Verdampferdruck gedrosselt wird und im Verdampfer 14 durch Einkopplung von Umgebungswärme aus dem Umgebungs- Wärmetauscher 16 wieder verdampft wird.

Das dampfförmige Adsorbat strömt durch die Rückschlagklappen 7-9 vom Verdampfer 14 in die adsorbierenden Module A1-A3 und wird dort vom Adsorbens unter Abgabe der Adsorptionswärme wieder aufgenommen. Die Adsorptionswärme wird an den Wärmeträger im Wärmekreislauf W1 übertragen, der sich dabei erwärmt. Nach dem Durchströmen aller in der Niederdruckphase befindlichen Module A1-A3 strömt der Wärmeträger im Wärmeträgerkreislauf W1 zum Hochtemperatur- Wärmetauscher HWT, um dort bis auf seine Maximaltemperatur aufgeheizt zu werden.

Mittels der erwähnten Umschalteinrichtung erfolgt eine zyklische Weiterschaltung aller Module A1-A3, D1-D3 im Wärmeträgerkreislauf W1, wodurch diese den kompletten Sorptionsprozeß bestehend aus Aufheizung und Desorption D1-D3 sowie Abkühlung und Adsorption A1-A3 durchlaufen. Je nachdem, in welcher Betriebsphase sich ein Modul A1-A3, D1-D3 befindet, strömt entweder desorbierter Kältemitteldampf durch die jeweilige Rückschlagklappe 1-6 vom Modul in den Kondensator 13, oder im Verdampfer 14 erzeugter Kältemitteldampf strömt durch die jeweilige Rückschlagklappe 7-12 vom Verdampfer 14 in das betreffende Modul, um dort vom Adsorbens adsorbiert zu werden.

Der Wärmeträgerkreislauf W2 dient zur Versorgung des Verbrauchers 17 mit Nutzwärme, die im Kondensator 13 oder im Niedertemperatur- Wärmetauscher NWT aufgenommen wird.

Bei zu niedrigen Außentemperaturen kann es je nach Auslegung der Anlage zu Betriebszuständen kommen, die die wahlweise integrierbaren Bypaßleitungen B1 und B2 erfordern. Im Falle solcher Betriebszustände werden die Ventile V1 und V2 geöffnet, so daß der Wärmeträger im Wärmeträgerkreislauf W1 aufgrund geringerer Druckverluste nur noch zwischen dem Hochtemperatur- Wärmetauscher HWT und dem Niederdrucktemperatur-Wärmetauscher NWT zirkuliert.

Während eines solchen Direktheizbetriebes findet kein Sorptionsprozeß statt und die Pumpe P3 kann abgeschaltet werden. Im Wärmeträgerkreislauf W2 ist in diesem Betriebszustand das Ventil V3 geöffnet, so daß die Nutzwärme vom Niedertemperatur- Wärmetauscher NWT durch die Bypaßleitung B3 direkt zum Verbraucher 17 transportiert wird.

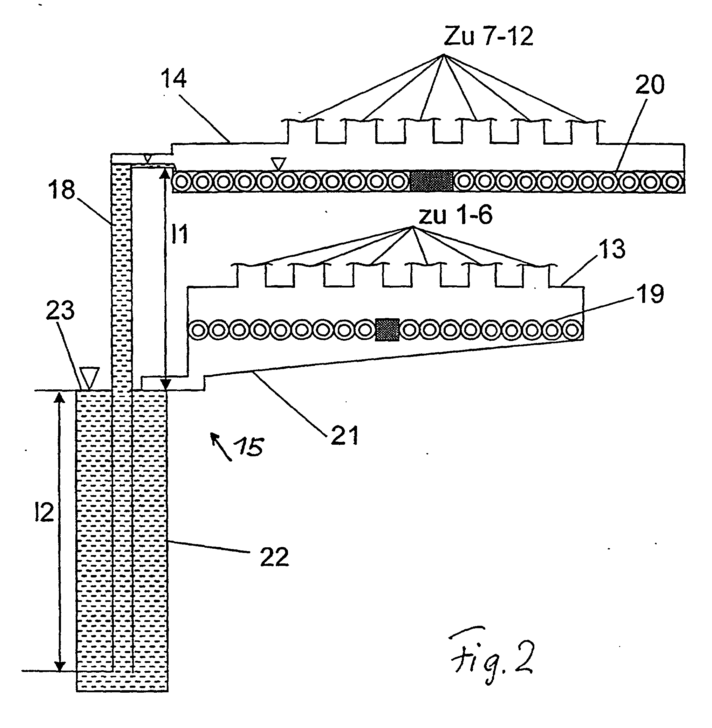

Der Kondensator 13 ist, wie Fig. 2 zeigt, unterhalb des Verdampfers 14 angeordnet. Dabei tropft der kondensierte Wasserdampf an einem Rippenrohr 19 des Kondensators 13 ab und gelangt über einen schräg angeordneten Gehäuseboden 21 zu einem Ablauf 22, in den ein Steigrohr 18 von oben hineinragt. Dabei bilden der Ablauf 22 und das Steigrohr 18 das Drosselorgan 15.

Der im Kondensator 13 herrschende Druck steht im Gleichgewicht mit dem Verdampferdruck plus dem durch die über den Spiegel 23 des Ablaufs 22 hinausragende Länge l1 des Steigrohres 18 erzeugten hydrostatischen Druck. Dabei ist diese Länge 11 so bemessen, daß auch bei der minimalen Druckdifferenz $\Delta p_{min}$ zwischen Kondensator 13 und Verdampfer 14 noch Kältemittel in den Verdampfer gefördert wird. Eine genaue Angabe der Länge l1 ist nicht möglich, da sie von der jeweiligen Kondensations- und Verdampfungstemperatur des Kältemittels abhängt.

Die Festlegung der Länge l1 erfolgt zweckmäßigerweise gemäß der Beziehung

$$\Delta p_{min} \geq \rho \cdot g \cdot l1$$

wobei $\Delta p_{min}$ die minimale Druckdifferenz zwischen Kondensator (13) und Verdampfer (14), bei der noch Kältemittel in den Verdampfer (14) gefördert wird, ρ die Dichte des eingesetzten Kältemittels, g die Gravitationskonstante und l1 die über die Höhe des Spiegels (23) des Ablaufs (22) aufragende Länge des Steigrohres (18) bedeuten.

Bei typischen Betriebsbedingungen für das Kältemittel Wasser von z.B. 8,7 mbar im Verdampfer und 42,4 mbar im Kondensator 13 und der daraus resultierenden minimalen Druckdifferenz von 33,7 mbar ergibt sich daraus eine über den Spiegel 23 hinausragende Länge l1 des Steigrohres 18 von 343,8mm (Wassersäule bei Kältemittel Wasser), die nicht überschritten werden darf. Die Gesamtlänge des Steigrohres 18 entspricht der Summe l1 + l2 (Fig. 2) und muß für den Fall der maximalen Druckdifferenz $\Delta p_{max}$ zwischen Kondensator 13 und Verdampfer 14 zuzüglich eines Sicherheitszuschlages S ausgelegt sein. Dabei bedeutet l1 die über den Spiegel 23 des Ablaufs 22 hinausragende Länge des Steigrohres 18 und l2 dessen Länge innerhalb des Ablaufs 22. Ansonsten würde der Kondensator 13 Dampf in die Steigleitung 18 fördern, was einen unerwünschten Druckausgleich zwischen Kondensator 13 und Verdampfer 14 zur Folge hätte. Die maximale Druckdifferenz zwischen Kondenstor 13 und Verdampfer ist, genauso wie die minimale, vom Vor- und Rücklauftemperaturniveau des eingesetzten Heiznetzes und damit von Kondensations- und Verdampfungstemperaturen abhängig.

Die Festlegung der Länge l lautet analog zu l1.

$$\Delta p_{max} + s = \leq \rho \cdot g \cdot l$$

wobei S den Sicherheitszuschlag bedeutet.

Eine typische maximale Druckdifferenz liegt bei 54 mbar, was einer Länge l von 551,2mm (Wassersäule bei Kältemittel Wasser) entspricht. Zuzüglich des Sicherheitszuschlages s würde die maximale Gesamtlänge l in diesem Fall 888,6mm (Wassersäule bei Kältemittel Wasser) betragen. Beim Einsatz höhergradiger Heiznetze erhöht sich die Länge l2 und damit die Gesamtlänge l entsprechend.

**Patentansprüche**

1.  Adsorptionswärmepumpe mit mindestens einem Adsorber und mindestens einem Desorber, sowie einem Kondensator (13) und einem Verdampfer (14), die über einen Kältemittelkreis miteinander verbunden sind und ein Wärmeträgerzweig des Kondensators (13) mit einem Wärmeverbraucher (17) und der Wärmeträgerzweig des Verdampfers (14) mit einem Umgebungs-Wärmetauscher (16) verbunden ist, wobei der Kondensator (13) mit dem Verdampfer (14) über eine ein Drosselorgan (15) enthaltende Leitung miteinander verbunden sind, **dadurch gekennzeichnet, daß** der Kondensator (13) unterhalb des Verdampfers (14) angeordnet ist und das Drosselorgan (15) im wesentlichen durch ein Steigrohr (18) gebildet ist, das in einen Ablauf (22) des Kondensators (13) hineinragt, welcher mit dem untersten Gehäuseboden (21) des Kondensators (13) verbunden ist.

2.  Adsorptionswärmepumpe nach Anspruch 1, **dadurch gekennzeichnet, daß** die über die Höhe des Spiegels des Ablaufs (22) aufragende Länge (l1) des Steigrohres (18) der Beziehung:

$$\Delta p_{min} \geq \rho \cdot g \cdot l1$$

entspricht, wobei $\Delta p_{min}$ die minimale Druckdifferenz zwischen Kondensator (13) und Verdampfer (14), bei der noch Kältemittel in den Verdampfer (14) gefördert wird, ρ die Dichte des eingesetzten Kältemittels, g die Gravitationskonstante und l1 die über die Höhe des Spiegels des Ablaufs (22) aufragende Länge des Steigrohres (18) bedeuten, und die Gesamtlänge (l) des Steigrohres (18) der Beziehung

$$\Delta p_{max} + s \leq \rho \cdot g \cdot l$$

entspricht,
wobei S einen Sicherheitszuschlag bedeutet.

**Claims**

1.  An adsorption heat pump having at least one adsorber and at least one desorber as well as a condenser (13) and an evaporator (14) which are connected with each other via a refrigerant circuit and wherein a heat-carrying branch of the condenser (13) is connected with a heat consumer (17) and the heat-carrying branch of the evaporator (14) is connected with an ambient heat exchanger (16), with the condenser (13) and the evaporator (14) being connected with each other via a line comprising a throttle member (15), **characterised in that** the condenser (13) is arranged below the evaporator (14) and that the throttle member essentially consists in an ascending pipe (18) extending into a discharge vessel (22) of the condenser (13) connected with the lowermost bottom of the housing (21) of the condenser (13).

2.  An adsorption heat pump as claimed in Claim 1 **characterised in that** the length (l1) of the ascending pipe (18) extending above the liquid level in the discharge vessel (22) corresponds to the relationship:

$$\Delta p_{min} \geq \rho \cdot g \cdot l1$$

wherein $\Delta p_{min}$ is the minimum pressure difference between the condenser (13) and the evaporator (14) at which refrigerant is still delivered to the evaporator (14), $\rho$ is the density of the refrigerant used, g is the gravitation constant and l1 is length of the ascending pipe (18) extending above the height of the liquid level in the discharge vessel (22), and that the total length of the ascending pipe (18) corresponds to the relationship:

$$\Delta p_{max} + S \leq \rho \cdot g \cdot l$$

wherein S is a safety allowance.

**Revendications**

1. Thermopompe à adsorption avec au moins un adsorbant et au moins un désorbant ainsi qu'avec un condenseur (13) et un évaporateur (14) reliés entre eux par un circuit de frigorigène, un circuit de chauffage du condenseur (13) étant relié à un récepteur de chaleur (17), et le circuit de chauffage de l'évaporateur (14) à un échangeur de chaleur extérieure (16), le condenseur (13) étant relié à l'évaporateur (14) par un tube comprenant un organe d'étranglement (15), thermopompe **caractérisée par le fait que** le condenseur (13) est placé sous l'évaporateur (14) et que l'organe d'étranglement (15) est essentiellement formé par un tube plongeur (18) qui pénètre dans un collecteur (22) du condenseur (13), lequel est relié au fond (21) du condensateur (13).

2. Thermopompe à adsorption suivant la revendication 1, **caractérisée par le fait que** la longueur (|1) dont dépasse le tube (18) le niveau de remplissage du collecteur (22) correspond à la relation

$$\Delta pmin \geq p \cdot g \cdot |1$$

$\Delta pmin$ signifiant la différence minimale de pression entre le condenseur (13) et l'évaporateur (14) à laquelle l'évaporateur (14) est encore alimenté en frigorigène, p, la densité du frigorigène utilisé, g, la constante gravitationnelle, et |1, la longueur dont le tube (18) dépasse le niveau de remplissage du collecteur (22), la longueur totale (1) du tube (18) correspondant à la relation:

$$\Delta pmax + s \leq p, g, |,$$

S signifiant une marge de sécurité.

Fig. 1

——— Wärmeträgerstrom

- - - - - - Kältemittelstrom

Zu 7-12

14

20

18

I1

zu 1-6

13

23

19

21

15

I2

22

Fig.2